# EUROPEAN PATENT SPECIFICATION

(11) **EP 2 528 454 B1**
(45) Date of publication and mention of the grant of the patent: **16.04.2014**
(21) Application number: 11701413.4
(22) Date of filing: 24.01.2011
(51) Int. Cl.: A23L 1/185, A23L 2/38, A23L 2/39

(54) **IMPROVEMENTS IN COMESTIBLE PRODUCTS AND THEIR MANUFACTURE**
VERBESSERUNGEN AN ESSBAREN PRODUKTEN UND IHRER HERSTELLUNG
AMÉLIORATIONS APPORTÉES À DES PRODUITS COMESTIBLES ET À LEUR FABRICATION

(30) Priority: 26.01.2010 GB 201001195
(43) Date of publication of application: 05.12.2012
(73) Proprietor: Cadbury UK Limited, Birmingham, West Midlands B30 2LU (GB)
(72) Inventor: SARKAR, Subhashis, Mumbai Maharashtra 400094 (IN); SURI, Krishnamohan, Mumbai Maharashtra 400026 (IN); AMBESKAR, Satish, Thane Maharashtra 400606 (IN); LEWIS DLIMA, Oriana, London Greater London SW19 1SP (GB); BHATIA, Atul, Mumbai 400026 (IN)
(74) Representative: Pidgeon, Robert John
(86) International application number: PCT/GB2011/050113
(87) International publication number: WO 2011/092489

(56) References cited:
- EP-A1- 1 068 807
- WO-A1-2010/128277
- US-A- 3 054 675
- US-B1- 6 706 697

## Description

### Technical field of the invention

The present invention relates to a process for preparing a malted beverage particulate. The malted beverage particulate may itself be a malted beverage end product (by which we mean herein a material intended to be dissolved in hot water or hot milk to provide a beverage). Alternatively the beverage particulate may be an intermediate product which is mixed with other ingredients to provide a malted beverage end product. The present invention further relates to the use of certain food compatible components to aid the manufacturing process.

### Background to the invention

Products for the preparation of malted beverages are well known. One example of a popular malted cocoa product is Bournvita®, which is a product in the form of a particulate, marketed by Cadbury®.

The manufacture of a malted beverage end product in the form of a particulate involves the preparation of a malted beverage particulate from malt extract. Malt extract is a viscous liquid produced from grain. It is well known, of course, for use in various comestible products including beer.

In a method of making a malted beverage end particulate a slurry is formed of malt extract and some or all of the other ingredients, and the slurry is dried and comminuted to form a particulate, which may be dry blended with any further ingredients that may be required.

In another method we have investigated in making the present invention, malt extract could be dried and comminuted to form a particulate, to be dry-blended with the other ingredients, to form a malted beverage end product.

However one problem with a drying step which involves malt extract is its tendency to expand, or puff up, during drying. This expansion can be very considerable - for example to several times the volume of the malt extract, before drying. The higher the malt extract content, the greater the expansion is likely to be. Since the product being dried is generally confined laterally, by a suitable container, there is, in practice, a substantial increase in the height. Consequently, drying apparatus has to leave a large headspace above the material being dried. If this is not done the expanding product may come into contact with overhead oven parts, for example support shelves or heater rails. The material being dried, still flowable, may ooze over the sides of respective containers and flow under gravity onto oven parts, for example support shelves or heater rails, underneath. The expansion may be non-uniform and / or sudden. The product may burst or surge from its container (a phenomenon known as "popping").

As a consequence of such excessive and / or uncontrolled expansion, various problems may ensue, including the need to shut down the apparatus and clean oven parts which have been in contact with the expanded malt extract; the associated loss of throughput; and the scrapping of the excessively-expanded malt extract for reasons of possible contamination, for example by burnt particles from the previous batch.

Another detrimental result is that drying shelves in ovens employed to dry malt extract are preferably widely spaced from each other, in the vertical direction, to allow for the excessive expansion. In terms of both energy use and throughput, this is inefficient.

The present invention employs certain additives to aid processes for producing malt extract in particulate form; notwithstanding the fact that some such additives may have been suggested already for use in malted beverage end products to improve the properties of the end products or the drinking properties of the beverages produced from them.

In US 6,673,384 there is described an agent for imparting creamy mouthfeel to foods and beverages. The foods and beverages are broadly stated but include instant and ready-to-serve beverages, including nutritional drinks in the form of shakes and malts, and the like. Dilutable mixes are described, to be mixed by the consumer with, for example, water or milk. Among the agents which can be added are anti-oxidants such as ascorbic acid, chelating agents such as citric acid, anti-foaming agents such as dimethylpolysiloxane, and emulsifiers, such as mono- and di-glycerides, lecithin, sucrose monoesters, polyglycerol esters, sorbitan esters and polyethoxylated glycerols.

US 4,016,337 describes reconstitutable food materials, for example dried soup, gravy, pudding, salad dressing and beverages (such as malted milks) and like mixes which the consumer can readily convert into useful aqueous products. The products comprise an admixture of co-agglomerates of a finely-divided non-dispersible material (which may comprise a thickening agent) and a silicon dioxide flow agent, the co-agglomerates having a thin coating of an emulsion comprising edible fat and glycerol over their external surfaces. The emulsion may contain an emulsifier, for example lecithin, or a mono- or di-glyceride ester.

However such descriptions of the use of certain agents to improve the properties of malted beverage end products are of no assistance in overcoming the problem of excessive expansion of malt extract, during the manufacture of such malted beverage end products.

EP 1068807A1 describes a process for producing a malted beverage powder. Liquid beverage ingredients and a portion of dry malted beverage ingredients are wet mixed. The wet mixture is vacuum dried to provide a dry cake. The dry cake is comminuted to a base powder. The base powder is dry mixed with a further portion of dry malted beverage ingredients.

It would be desirable to provide an improved process for preparing a malted beverage particulate.

### Summary of the invention

In accordance with a first aspect of the present invention there is provided a process for preparing a malted beverage particulate, the process comprising:
a) a mixing stage in which a liquid material comprising malt extract in an amount of at least 10% wt/wt, is mixed with an expansion control agent in an amount of from 0.001 to 5 wt%, the expansion control agent being selected from one or more of: a phosphatide compound; a fatty acid ester; and a polydialkyl siloxane; to form a liquid admixture;
b) a drying stage in which the liquid admixture is formed into a dried mass, and
c) a comminution stage in which the malted beverage particulate is formed from the dried mass.

The liquid material is generally a viscous liquid material, for example a slurry or syrup.

In one embodiment the liquid material may contain all or most of the ingredients which will form the end product, for example malt extract and the expansion control agent, and a major proportion of the other ingredients of the end product, for example more than 50 %wt/wt, and preferably 70 %wt/wt, of the other ingredients of the end product.

In another embodiment the liquid material may contain malt extract and the expansion control agent, and no other ingredients of the end product, or a minor proportion of the other ingredients of the end product, for example up to 50 %wt/wt, and preferably up to 30 %wt/wt, of the other ingredients of the end product.

It is therefore envisaged that in embodiments of the invention the malted beverage particulate produced by the process may be a malted beverage end product; but in other embodiments the particulate may be an intermediate product in the manufacture of a malted beverage end product. Thus, there may suitably be a further step (d) of mixing the malted beverage particulate with other dry ingredient(s) to produce a malted beverage end product.

Other ingredients of a malted beverage end product may include one or more of: sweetener (including sugar); milk particulate; whey particulate; cocoa particulate; salt; flavorants; coloring agents; viscosity modifiers or other agents giving body to the beverage (for example hydrocolloids, starch products, cellulosic products); pH control agents, especially alkalinity agents, such as sodium hydrogen carbonate, sodium hydroxide and sodium carbonate; and wetting agents.

Suitably the liquid admixture produced in the mixing stage a) comprises at least 10 %wt/wt malt extract, preferably at least 20 %wt/wt, preferably at least 30 %wt/wt, and more preferably at least 40 %wt/wt.

Suitably the liquid admixture produced in the mixing stage a) comprises up to 95 %wt/wt of malt extract, preferably up to 90 %wt/wt, and more preferably up to 85 %wt/wt.

The expansion control agent may lead to any expansion on drying to be more steady or even, without, or with reduced, bursting or surging ("popping"). Additionally or alternatively the expansion control agent may reduce any expansion.

One suitable expansion control agent is a phosphatide. A phosphatide, which may also be called a phospholipid, is a phosphorous-containing lipid made up of a fatty acid, a phosphate group, and a simple organic molecule, for example glycerol. Examples include phosphatidylcholine, phosphatidylethanolamine and phosphatidylinosidol. A preferred phosphatide in this invention is phosphatidylcholine.

Phosphatides are major components of lecithin.

Lecithins (which can be from a natural source, or a synthetic source, or a semisynthetic source starting with a natural material) are preferred expansion control agents, for use in the present invention.

A preferred lecithin is soya lecithin.

Another suitable expansion control agent is a fatty acid ester.

The acid-derived portion of a suitable fatty acid ester may be a monocarboxylic or polycarboxylic acid. The alkyl component (excluding the -COOH, or groups) may suitably contain from 10 to 40 carbon atoms. It may suitably be a dimer acid but is preferably a monomer acid, suitably having 10 to 24, preferably 12 to 20, and most preferably 16 to 20 carbon atoms.

The alcohol-derived part of a suitable fatty acid ester may be a monohydric or polyhydric alcohol, but preferably is a polyhydric alcohol, for example selected from sucrose, cellulose, sorbitol and, most preferably, glycerol.

An especially preferred example of a fatty acid ester expansion control agent is glycerol monostearate (GMS) and glycerol monooleate (GMO).

A fatty acid ester may be the sole expansion control agent present.

However a phosphatide and a fatty acid ester may be used together in some embodiments.

Another expansion control agent is a polydialkylsiloxane (also known as a silicone), preferably a polydi(C₁₋₄)alkylsiloxane, and most preferably a polydimethylsiloxane (PDMS). Preferred polysiloxanes for use in this invention have a molecular weight of from 1000 to 25000, preferably 10000 to 15000. Preferred polysiloxanes have viscosity values in the range of from 100 to 250 centistokes, preferably from 150 to 1000 centistokes, preferably from 200 to 500 centistokes, measured using the method of ASTM - D1200 - 94 (2005), measured at 25°C, using a Ford Cup Viscometer with a B4 cup.

Within the definitions of the overall amounts of the malt extract and the expansion control agent stated in claim 1, the expansion control agent may suitably be used in an amount of from 0.001 %wt/wt, preferably from 0.01 %wt/wt, preferably from 0.05 %wt/wt, and more preferably from 0.1 %wt/wt, based on the weight of liquid malt extract employed, in the mixing stage a).

Within the definitions of the overall amounts of the malt extract and the expansion control agent stated in claim 1, the expansion control agent may suitably be used in an amount up to 5 %wt/wt, preferably up to 3 %wt/wt, preferably up to 2 %wt/wt, and more preferably up to 1 %wt/wt, based on the weight of liquid malt extract employed, as added in the mixing stage a).

As noted above the expansion control agents described above may be used together, in the process. When more than one expansion control agent is employed, the amounts stated above for the expansion control agent apply to the total quantity of the expansion control agents employed.

In the mixing stage a), the malt extract may be mixed with a expansion control agent by any convenient means. Preferably the mixing stage a) is carried out at an elevated temperature of at least 40°C, for example a temperature in the range 40 to 120°C, preferably 60 to 100°C, preferably 75 to 95°C.

Within the definitions of the overall amounts of the malt extract and the expansion control agent stated in claim 1, the ratio of malt extract to expansion control agent in the liquid admixture produced by the mixing stage a) is suitably in the range from 10 to 1000 parts malt extract to 1 part expansion control agent, by weight (as added). The drying stage b) is preferably carried out at an elevated temperature of at least 40°C, preferably 40 to 120°C, preferably 60 to 100°C, preferably 75 to 95°C.

Preferably the drying stage b) is carried out at a sub-atmospheric pressure or under vacuum. Preferably it is carried out under vacuum, by which we mean at a pressure of from 0 to 1 x 10⁴ Pa, preferably from 0 to 1 x 10³ Pa. Preferably the drying stage takes place in a vacuum oven.

The drying stage b) may employ short periods of increased air pressure (or air blasts), intended to cause breakage of bubbles which may form in the drying material.

The drying stage b) may be carried out in a continuous manner or in a batch manner.

The drying stage b) preferably takes from 20 to 360 minutes, preferably from 40 to 240 minutes, preferably from 60 to 120 minutes.

Preferably the liquid admixture is dried in shallow trays, suitably so as to form a "slab" of dried material, which has not risen as much as the same amount of malt extract would have done, without the expansion control agent.

The dried mass is removed from any container and undergoes the comminution stage c) in which the malted beverage particulate is formed from the dried mass. This may be achieved by any suitable comminuting equipment, for example a food grinding mill or the like.

The resulting malted beverage particulate could be an end product, ready to be packaged, for sale. This will be the case when the liquid admixture contained all the required ingredients. More commonly the particulate is an intermediate in the manufacture of a malted beverage end product. In such a case the malted beverage particulate resulting from the process is mixed with other dry ingredient(s) to produce the malted beverage end product.

The particulate may be a powder. It may be a pellet or granule product, formed directly or from a powder.

Thus the invention can provide a malted beverage particulate comprising particles which comprise malt extract and an expansion control agent selected from one or more of: a phosphatide compound; a fatty acid ester; and a polydialkyl siloxane, as defined above with reference to the first aspect. The malted beverage particulate may include further ingredient(s), as defined above with reference to the first aspect.

A malted beverage end product, as defined herein; either prepared directly by the process of the first aspect, or prepared by mixing further, dry, ingredient(s), with a product produced by a process of the first aspect.

In accordance with a second aspect of the present invention there is provided the use of an expansion control agent selected from one or more of: a phosphatide compound; a fatty acid ester; and a polydialkyl siloxane to control or reduce the expansion of malt extract during drying thereof.

### Detailed description of the Invention

Specific embodiments of the present invention will now be described, by way of example only, with reference to the following description of experiments which have been carried out.

### Experiment Set A

Laboratory scale experiments were carried out to assess different possible expansion control agents in controlling the expansion of malt extract during drying. Malt extract (ME) was mixed with a selected expansion control agent in a small-scale mixer. This took place at a temperature of approximately 60°C. The resulting slurry was poured into a container and dried in a vacuum oven at 85°C for 90 minutes, at a vacuum of 1 x 10⁵ Pa. Expressed in a different way, this means a pressure of 1 x 10³ Pa.

The expansion control agents employed were as follows:
- soya lecithin (SL)
- liquid glycerol monooleate (GMO)
- polydimethylsiloxane (PDMS) - food grade, viscosity 350 cSt at 25°C (measured as stated above), molecular weight approximately 12500.

The compositions to be dried were as follows:-

| Ex. No. | Components | ME (g) | Soya lecithin (mg) | GMS (mg) | PDMS (mg) |
|---|---|---|---|---|---|
| 1 | ME + SL | 10 | 90 | 0 | 0 |
| 2 | ME + GMS | 10 | 0 | 90 | 0 |
| 3 | ME + SL + PDMS | 10 | 90 | 0 | 14 |
| 4 | ME + PDMS | 10 | 0 | 0 | 14 |
| 5 | ME only (comparative) | 10 | 0 | 0 | 0 |

PDMS is present in an amount of 1500 ppm.

The containers used were cylindrical open-topped shallow metal containers of diameter 7.5 cm. The slurry had a depth of 2 mm compared with the height of the container walls, of 2.5 cm. The results may be described as follows:

### Example 1

Dried mass projected moderately from the top of the container in an even, domed manner. There was no spillage of material over the side of the container.

### Example 2

Dried mass projected moderately from the top of the container in an even, domed manner. There was no spillage of material over the side of the container.

### Example 3

Dried mass projected above the top of the container in an even, domed manner, to a lesser extent than Examples 1 and 2. There was no spillage of material over the side of the container.

### Example 4

The dried mass did not protrude much above the top of the container, but there was some spillage of material over the sides of the container, and onto the oven shelf below.

### Example 5

There was a moderate protrusion of dried mass above the top of the container and a substantial degree of spillage of the material, over the sides of the container, and onto the oven shelf below.

Examples 1 to 3 were satisfactory and the dried masses could readily be knocked out of the containers and comminuted, to produce a flowable particulate useful for blending with other ingredients to form a malted beverage end product. Example 4 was partly satisfactory. Example 5 was unsatisfactory.

### Example Set B

Similar experiments were carried out, but on a larger scale, in a pilot plant vacuum oven. The compositions tested were as follows:

| Ex. No. | Components | ME (g) | SL (g) | GMS (g) | PDMS (g) |
|---|---|---|---|---|---|
| 6 | ME + SL | 200 | 1 | 0 | 0 |
| 7 | ME + GMS | 200 | 0 | 1 | 0 |
| 8 | ME + SL + PDMS | 200 | 1 | 0 | 0.075 |
| 9 | ME only (comparative) | 200 | 0 | 0 | 0 |

PDMS is present in an amount of 300 ppm.

In these examples a slurry comprising 200 g of malt extract was poured into rectangular trays. The area of the trays was: Ex. No. 6 : 400 cm² / Ex. No. 7 : 400 cm² / Ex. No. 8 : 530 cm² / Ex. No. 9 : 720 cm². The height of the trays was 4.3 cm. The trays were loaded into a vacuum oven. The depth of the slurry in the trays was approximately 3 mm in the 400 cm² trays, 2 mm in the 530 cm² tray, and 1.5 mm in the 730 cm² tray. The drying temperatures and times were as described for Example Set A.

The results can be described as follows:

### Example 6

The dried mass was a low-risen "slab" which did not protrude above the sides of the tray. The maximum height reached was 5 cm.

### Example 7

The dried mass was a low-risen "slab" which did not protrude above the sides of the tray. The maximum height reached was 5.9 cm.

### Example 8

The dried mass was a low-risen "slab" which did not protrude above the sides of the tray. The maximum height reached was 5 cm.

### Example 9

The dried mass was a substantial body which protruded to a significant extent above the sides of the tray. The maximum height could not be determined as the mass reached the overboard heating plate during drying (the spacing between the heating plates in the oven being 7.8 cm).

Examples 6-8 were dried masses which could readily be knocked out of the containers and comminuted, to produce a flowable particulate useful for blending with other ingredients to form a malted beverage end product. Example 9 was unsatisfactory.

### Example Set C

Following the experiments of Example Set A and B the following protocol for producing malt extract particulate from malt extract was devised.
1. Heat the malt extract (with 70% - 85% solids content) to 50-70°C.
2. Mix 0.5 % of soya lecithin or GMS (denotes 100% active content) into the heated malt extract.
3. Mix the mixture thoroughly for 10-15 mins to make a homogeneous solution.
4. Pour the resultant solution hot (at 60°C) into trays of dimension (125 cm x 33 cm) with a deposition amount of 3 kg/tray.
5. Place the trays on the hot plates of the vacuum oven (for the plant trial sixty such plates are placed in a single oven).
6. Heat the oven to 65°C prior to placing the trays in the oven (using hot water or steam).
7. Close the oven door and apply the vacuum.
8. Maintain the temperature of the oven at 65 -70°C throughout the drying process.
9. Control the vacuum ramp rate in the oven to maintain a particular pressure profile within the oven during drying. A typical pressure cycle is shown below. During the drying process air blasts are introduced to break the bubbles formed in trays during drying.

| **Time** | **Pressure (Pa)** | | **Temp (°C)** | **Comments** |
|---|---|---|---|---|
| | **Before air blast** | **After air blast** | | |
| 18:05 | 10132 | - | 65 | Oven closed and vacuum start |
| 18:08 | 61328 | - | 65 | |
| 18:09 | 47995 | - | | Air bleeding started to control vacuum |
| 18:10 | 34664 | - | 65 | |
| 18:12 | 34664 | - | 65 | Steam circulation started in heating plates |
| 18:15 | 34664 | - | 68 | |
| 18:17 | 34664 | - | 68 | |
| 18:22 | 34664 | - | 70 | |
| 18:25 | 34664 | - | 70 | |
| 18:27 | 34664 | - | 70 | |
| 18:30 | 34664 | - | 70 | |
| 18:31 | - | - | 70 | Air bleeding decreased a little to decrease pressure |
| 18:36 | 25331 | - | 70 | |
| 18:39 | 23998 | - | 70 | |
| 18:40 | 23998 | 25331 | 70 | Air Blast - 1 |
| 18:41 | - | - | 70 | Air bleeding decreased further |
| 18:43 | 21332 | - | 70 | |
| 18:45 | 17332 | - | 70 | |
| 18:46 | 15999 | - | 70 | Air bleeding stopped |
| 18:47 | 14665 | - | 70 | |
| 18:48 | 14665 | 17331 | 70 | Air Blast - 2 |
| 18:50 | 10666 | - | 70 | |
| 18:53 | 10666 | 17332 | 70 | Air Blast - 3 |
| 18:55 | 10666 | - | 70 | |
| 18:58 | 10666 | - | 70 | |
| 18:59 | 10666 | 11999 | 70 | Air Blast - 4 |
| 19:05 | 9333 | - | 70 | Additional vacuum pump started |
| 19:06 | 9333 | 10666 | 70 | Air Blast - 5 |
| 19:09 | 10666 | 11999 | 70 | Air Blast - 6 |
| 19:13 | 7999 | - | 70 | |
| 19:14 | 7999 | - | 70 | Steam circulation stopped in heating plates |
| 19:15 | 7999 | 14665 | 70 | |
| 19:20 | 5333 | - | 70 | |
| 19:25 | 5333 | 101325 | 70 | Vacuum pump stopped and oven opened |

The material could readily be knocked out of the containers and comminuted, to produce a flowable particulate useful for blending with other ingredients to form a malted beverage end product.

## Claims

1. A process for preparing a malted beverage particulate, the process comprising:
a) a mixing stage in which a liquid material comprising malt extract in an amount of at least 10% wt/wt, is mixed with an expansion control agent in an amount of from 0.001 to 5 wt%, the expansion control agent being selected from one or more of: a phosphatide compound; a fatty acid ester; and a polydialkyl siloxane; to form a liquid admixture;
b) a drying stage in which the liquid admixture is formed into a dried mass, and
c) a comminution stage in which the malted beverage particulate is formed from the dried mass.

2. A process as claimed in claim 1 wherein the expansion control agent is a phosphatide.

3. A process as claimed in claim 2 wherein the expansion control agent is soya lecithin.

4. A process as claimed in claim 1 wherein the expansion control agent is a glycerol ester.

5. A process as claimed in claim 1, wherein the expansion control agent is a polydimethyl siloxane.

6. A process as claimed in any preceding claim wherein the liquid material contains from 40 to 85 %wt malt extract.

7. A process as claimed in any preceding claim wherein the ratio of malt extract to expansion control agent in the liquid admixture is in the range from 10 to 1000 parts malt extract to one part expansion control agent, by weight (as added).

8. A process according to any preceding claim wherein mixing stage a) is carried out at a temperature from 40°C to 120°C.

9. A process according to any preceding claim wherein drying stage b) is carried out at a temperature from 40°C to 120°C.

10. A process according to any preceding claim wherein drying stage b) is carried out at a sub-atmospheric pressure or under vacuum.

11. A process for preparing a malted beverage end product, the process comprising carrying out a process as claimed in claim 10 for making a malted beverage particulate, and including as part of the process the further step of
d) mixing the malted beverage particulate with other dry ingredient(s) to produce the malted beverage end product.

12. Use of an expansion control agent selected from one or more of: a phosphatide compound; a fatty acid ester; and a polydialkyl siloxane; to reduce and / or control the expansion of malt extract during drying thereof.

## Patentansprüche

1. Verfahren zur Herstellung von malzhaltigen Getränkepartikeln, das Folgendes umfasst:
a) eine Mischstufe, in der ein flüssiges Material, das Malzextrakt in einer Menge von mindestens 10% (w/w) umfasst, mit einem Expansionskontrollmittel in einer Menge von 0,001 bis 5 Gew.-% vermischt wird, wobei das Expansionskontrollmittel aus einem oder mehreren der Folgenden ausgewählt ist: einer Phosphatidverbindung; einem Fettsäureester; und einem Polydialkylsiloxan; wodurch eine flüssige Mischung entsteht;
b) eine Trocknungsstufe, in der aus der flüssigen Mischung eine trockene Masse gebildet wird, und
c) eine Zerkleinerungsstufe, in der aus der trockenen Masse die malzhaltigen Getränkepartikel gebildet werden.

2. Verfahren nach Anspruch 1, wobei es sich bei dem Expansionskontrollmittel um ein Phosphatid handelt.

3. Verfahren nach Anspruch 2, wobei es sich bei dem Expansionskontrollmittel um Sojalecithin handelt.

4. Verfahren nach Anspruch 1, wobei es sich bei dem Expansionskontrollmittel um einen Glycerinester handelt.

5. Verfahren nach Anspruch 1, wobei es sich bei dem Expansionskontrollmittel um ein Polydimethylsiloxan handelt.

6. Verfahren nach einem vorhergehenden Anspruch, wobei das flüssige Material 40 bis 85 Gew.-% Malzextrakt enthält.

7. Verfahren nach einem vorhergehenden Anspruch, wobei das Verhältnis von Malzextrakt zu Expansionskontrollmittel in der flüssigen Mischung im Bereich von 10 bis 1000 Teile Malzextrakt pro Teil Expansionskontrollmittel in Bezug auf das Gewicht (wie hinzugefügt) liegt.

8. Verfahren nach einem vorhergehenden Anspruch, wobei die Mischstufe a) bei einer Temperatur von 40°C bis 120°C erfolgt.

9. Verfahren nach einem vorhergehenden Anspruch, wobei die Trocknungsstufe b) bei einer Temperatur von 40°C bis 120°C erfolgt.

10. Verfahren nach einem vorhergehenden Anspruch, wobei die Trocknungsstufe b) bei Subatmosphärendruck oder im Vakuum erfolgt.

11. Verfahren zur Herstellung eines malzhaltigen Getränkeendprodukts, wobei das Verfahren umfasst, dass man ein Verfahren nach Anspruch 10 zur Herstellung eines malzhaltigen Getränkepartikels durchführt und als Teil des Verfahrens den weiteren Schritt des d) Mischens des malzhaltigen Getränkepartikels mit (einem) anderen trockenen Bestandteil(en), um das malzhaltige Getränkeendprodukt herzustellen, einschließt.

12. Verwendung eines Expansionskontrollmittels, ausgewählt aus einem oder mehreren der Folgenden: einer Phosphatidverbindung; einem Fettsäureester; und einem Polydialkylsiloxan; zum Verringern und/oder Kontrollieren der Expansion des Malzextrakts während dessen Trocknung.

## Revendications

1. Procédé de préparation d'une matière particulaire de boisson maltée, le procédé comprenant :
a) une étape de mélange dans laquelle un matériau liquide comprenant un extrait de malt selon une quantité d'au moins 10% poids/poids est mélangé avec un agent de contrôle d'expansion selon une quantité allant de 0,001 à 5% en poids, l'agent de contrôle d'expansion étant choisi parmi un ou plusieurs parmi : un composé de phosphatide ; un ester d'acide gras ; et un polydialkylsiloxane ; pour former un mélange liquide ;
b) une étape de séchage dans laquelle le mélange liquide est mis sous forme de masse séchée, et
c) une étape de broyage dans laquelle la matière particulaire de boisson maltée est formée à partir de la masse séchée.

2. Procédé selon la revendication 1, dans lequel l'agent de contrôle d'expansion est un phosphatide.

3. Procédé selon la revendication 2, dans lequel l'agent de contrôle d'expansion est la lécithine de soja.

4. Procédé selon la revendication 1, dans lequel l'agent de contrôle d'expansion est un ester de glycérol.

5. Procédé selon la revendication 1, dans lequel l'agent de contrôle d'expansion est un polydiméthylsiloxane.

6. Procédé selon l'une quelconque des revendications précédentes, dans lequel le matériau liquide contient de 40 à 85% en poids d'extrait de malt.

7. Procédé selon l'une quelconque des revendications précédentes, dans lequel le rapport de l'extrait de malt à l'agent de contrôle d'expansion dans le mélange liquide se trouve dans la plage allant de 10 à 1000 parties d'extrait de malt pour une partie d'agent de contrôle d'expansion, en poids (tel qu'ajouté).

8. Procédé selon l'une quelconque des revendications précédentes, dans lequel l'étape de mélange a) est effectuée à une température allant de 40°C à 120°C.

9. Procédé selon l'une quelconque des revendications précédentes, dans lequel l'étape de séchage b) est effectuée à une température allant de 40°C à 120°C.

10. Procédé selon l'une quelconque des revendications précédentes, dans lequel l'étape de séchage b) est effectuée à une pression sub-atmosphérique ou sous vide.

11. Procédé de préparation d'un produit final de boisson maltée, le procédé comprenant la mise en oeuvre d'un procédé selon la revendication 10 pour la préparation d'une matière particulaire de boisson maltée, et comportant comme partie du procédé l'étape supplémentaire
d) de mélange de la matière particulaire de boisson maltée avec un ou plusieurs autres ingrédients secs afin de produire le produit final de boisson maltée.

12. Utilisation d'un l'agent de contrôle d'expansion choisi parmi un ou plusieurs parmi : un composé de phosphatide ; un ester d'acide gras ; et un polydialkylsiloxane ; afin de réduire et/ou contrôler l'expansion de l'extrait de malt lors du séchage de celui-ci.
